# EUROPÄISCHE PATENTSCHRIFT

(11) **EP 1 495 347 B1**
(45) Veröffentlichungstag und Bekanntmachung des Hinweises auf die Patenterteilung: **07.05.2008**
(21) Anmeldenummer: 03718740.8
(22) Anmeldetag: 08.04.2003
(51) Int. Cl.: G02B 3/00, C03B 11/08, B60Q 1/02, B60Q 1/04, B29D 11/00, F21S 8/10

(54) **Blankgepresste Linse**
POLISHED PRESSED LENS
LENTILLE PRESSEE BRILLANTE

(30) Priorität: 16.04.2002 DE 10216706
(43) Veröffentlichungstag der Anmeldung: 12.01.2005
(73) Patentinhaber: Schott AG, 55122 Mainz (DE)
(72) Erfinder: BONITZ, Ralf, 55122 Mainz (DE); ADEBAHR, Rainer, 31073 Grünenplan (DE); PETERS, Frank, 31073 Delligsen (DE)
(74) Vertreter: Mehler, Klaus
(86) Internationale Anmeldenummer: PCT/EP2003/003622
(87) Internationale Veröffentlichungsnummer: WO 2003/087893

(56) Entgegenhaltungen:
- EP-A- 0 308 010
- DE-A- 10 001 860
- DE-A- 10 023 754
- PATENT ABSTRACTS OF JAPAN vol. 009, no. 033 (P-334), 13. Februar 1985 (1985-02-13) & JP 59 177506 A (OLYMPUS KOGAKU KOGYO KK), 8. Oktober 1984 (1984-10-08)

## Beschreibung

Die Erfindung betrifft eine Linse gemäß dem Oberbegriff des Patentanspruchs 1, eine Verwendung der Linse sowie ein Herstellungsverfahren.

Die J59-177506 A beschreibt Linsen eines Projektionsobjektivs, wobei die beiden außen liegenden Linsen des Objektivs über einen gegenüber der planen Linsenfläche vorstehenden Auflagerand verfügen, der gestuft ausgeführt ist. Die dadurch erzeugte Schulter dient zur Auflage auf einer weiteren Linse, nämlich einer Bikonvexlinse, mit dem Ziel, einen Abstand zwischen den Linsen festzulegen.

Die JP59-157603 A zeigt zwei Linsen, die Anlageränder aufweisen, an deren Außenumfang Vorsprünge mit geneigten Flächen vorgesehen sind. Auf Grund dieser Ausgestaltung wird Wert auf hohe Präzision und Stabilität der Ränder gelegt.

Insoweit sind die Auflageränder in beiden Entgegenhaltungen durch die Einbaulage zusammen mit weiteren Linsen bestimmt und ausgelegt.

Bisher werden solche Linsen auf der einen Seite als Asphäre gepresst und auf der anderen Seite plan geschliffen. Dieser Schleifprozess, an den sich noch ein Polierprozess anschließt, wird nach dem Durchlaufen eines Kühlofens durchgeführt. Der Durchlauf durch einen Kühlofen ist notwendig, um den noch heißen Rohling gezielt abzukühlen, damit Spannungen innerhalb der Linse abgebaut werden können. Hierbei muss allerdings der Rohling auf einem Transportband abgelegt werden, wodurch die Auflagefläche der Linse nachteilig beeinflusst wird. Wenn nach dem Durchlaufen des Kühlofens allerdings ein Schleifprozess angeschlossen wird, werden diese Oberflächendeformationen beseitigt.

Dieses Verfahren hat allerdings den Nachteil, dass zusätzliche Schleif-und Polierprozesse erforderlich werden.

Aufgabe der Erfindung ist es, ein Herstellungsverfahren bereitzustellen, bei dem ein derartiger Nachbearbeitungsprozess, wie Schleifen und Polieren, entfällt.

Diese Aufgabe wird mit einer Linse gelöst, die beidseitig blank gepresst ist. Durch das beidseitige Blankpressen entfallen entsprechende Nachbearbeitungsprozesse. Das beidseitige Blankpressen ist dadurch möglich, dass ein Auflagerand vorhanden ist, der den Vorteil bietet, dass die Linse beim Ablegen auf einer Unterlage ausschließlich mit diesem Auflagerand anliegt und ein Kontakt der planen Oberfläche mit der Auflage vermieden wird, so dass die plane Linsenfläche nicht beschädigt wird. Eine beidseitig blank gepresste Linse mit Auflagerand kann somit problemlos auf ein Transportband, beispielsweise eines Kühlofens, gelegt werden.

Vorzugsweise ist der Auflagerand am Außenumfang der Linse angeformt. Dadurch, dass der Halterand an der Linse außen umlaufend angeformt ist und der Auflagerand an diesem Halterand angeformt ist, befindet sich der Auflagerand außerhalb des Strahlenganges und somit außerhalb der optisch wirksamen Fläche der Linse.

Die Dicke D des Auflagerandes beträgt mindestens 0,2 mm. Diese Mindestdicke ist notwendig, damit eventuelle Unebenheiten auf der Auflagefläche, insbesondere auf einem Kühlband, nicht zu einem Kontakt mit der planen Oberfläche führen.

Vorzugsweise ist die Breite B₁ des Auflagerandes kleiner gleich der Breite B₂ des Halterandes.

Vorzugsweise wird eine beidseitig blank gepresste Linse mit einer gekrümmten Oberfläche, mit einer planen Oberfläche und mit einem am Linsenrand angeformten Halterand, an dem ein gegenüber der planen Oberfläche vorstehender Auflagerand angeformt ist, für Projektionsscheinwerfer für Kraftfahrzeuge verwendet.

Das Verfahren zur Herstellung einer Linse mit einer gekrümmten Oberfläche und mit einer planen Oberfläche sieht vor, dass am Linsenrand ein Halterand und ein am Halterand gegenüber der planen Oberfläche vorstehender Auflagerand angeformt wird und dass beide Oberflächen blank gepresst werden.

Vorzugsweise wird die Linse beim Abkühlprozess auf dem Auflagerand abgelegt.

Eine beispielhafte Ausführungsform der Erfindung wird nachfolgend anhand der Zeichnungen näher erläutert.

Es zeigen
- Fig. 1: einen Schnitt durch die erfindungsgemäße Linse und
- Fig. 2: die Linse im eingebauten Zustand.

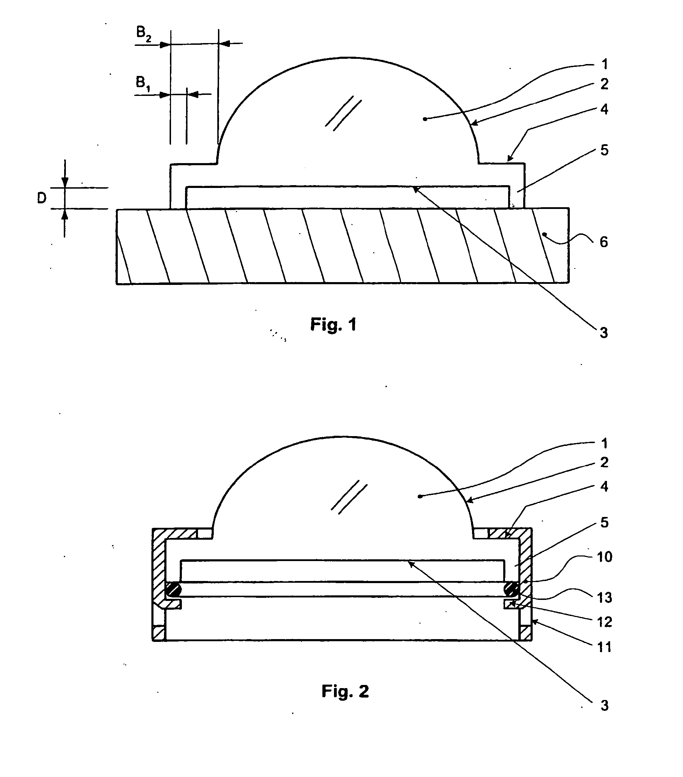

In der Fig. 1 ist die Linse 1 im Querschnitt dargestellt. Die Linse besitzt eine asphärische Oberfläche 2 und eine plane Oberfläche 3. Am Linsenrand ist ein Halterand 4 angeformt, der in seinem Außenbereich in einen Auflagerand 5 übergeht, der gegenüber der planen Oberfläche 3 vorsteht. Auf einer Unterlage 6 liegt die Linse nur mittels des Auflagerandes 5 auf, so dass die plane Linsenfläche 3 nicht beschädigt werden kann. Der Auflagerand 5 steht um seine Dicke D gleich ca. 0,3 mm gegenüber der Oberfläche 3 vor. Die Breite B₁ des Auflagerandes 5 ist geringer als die Breite B₂ des Halterandes 4, damit der optisch wirksame Bereich der planen Oberfläche 3 nicht eingeschränkt wird. Wenn es sich um eine beidseitig blank gepresste Linse 1 handelt, kann sie nach dem Blankpressprozess problemlos gelagert und transportiert werden bzw. weiteren Verfahrensschritten bezüglich der Abkühlung zugeführt werden, ohne dass die Linsenoberfläche dadurch beschädigt wird.

In der Fig. 2 ist der Einbauzustand der Linse 1, z. B. als Projektionsscheinwerfer eines Fahrzeugs, dargestellt. Eine Halterung 10 umgreift den Halterand 4 an der der asphärischen Linsenfläche 2 zugewandten Seite. Sie besteht im Wesentlichen aus einem Blechring, aus dessen Umfangswand 11 Laschen 12 ausgestanzt sind, die nach innen umgebogen sind. Zwischen den Laschen 12 und dem Auflagerand 5 ist ein Sprengring 13 angeordnet. Dadurch wird die Linse sicher gehalten. Der Vorteil besteht darin, dass auch zum Einbau der Auflagerand 5 benutzt wird und die Linsenoberfläche 3 nicht durch die Halterung beeinträchtigt wird.

### Bezugszeichen

- 1: blank gepresste Linse
- 2: konvexe Linsenfläche
- 3: plane Linsenfläche
- 4: Halterand
- 5: Auflagerand
- 6: Unterlage
- 10: Linsenhalterung
- 11: Umfangswand
- 12: Lasche
- 13: Sprengring

## Patentansprüche

1. Verfahren zur Herstellung einer Projektionsscheinwerferlinse (1) für Kraftfahrzeuge mit einer gekrümmten Oberfläche (2) und mit einer planen Oberfläche (3), bei dem am Linsenrand ein Halterand (4) und ein am Halterand (4) gegenüber der planen Oberfläche (3) vorstehender Auflagerand (5) zur Auflage auf einer Unterlage angeformt wird und bei dem beide Oberflächen des heißen Rohlings der Linse (1) blank gepresst werden anschliessend wird der noch heisse Rohling gezielt abgehühlt um Spannungen innerhalb der linse abzubanen, dazu wird die Linse (1) beim Abkühlprozess mit dem Auflagerand (5) auf einem Kühlband abgelegt.

2. Verfahren nach Anspruch 1, bei dem der Auflagerand (5) am Außenumfang der Linse (1) angeformt wird.

3. Verfahren nach Anspruch 1 oder 2, bei dem die Dicke (D) des Auflagerandes (5) mindestens 0,2 mm beträgt.

4. Verfahren nach einem der Ansprüche 1 bis 3, bei dem die Breite (B₁) des Auflagerandes (5) kleiner gleich der Breite (B₂) des Halterandes (4) ist.

## Claims

1. Method for producing a projection headlight lens (1) for motor vehicles, having a curved surface (2) and having a flat surface (3), in the case of which method there is integrally formed on the lens edge a holding edge (4) and a supporting edge (5), projecting on the holding edge (4) towards the flat surface (3), for providing support on a substrate, and in the case of which both surfaces of the hot blank of the lens (1) are precision-pressed, and subsequently the still hot blank is specifically cooled in order to reduce stresses inside the lens, to which end the lens (1) is deposited with the supporting edge (5) on a cooling belt during the cooling process.

2. Method according to Claim 1, in which the supporting edge (5) is integrally formed on the outer circumference of the lens (1).

3. Method according to Claim 1 or 2, in which the thickness (D) of the supporting edge (5) is at least 0.2 mm.

4. Method according to one of Claims 1 to 3, in which the width (B₁) of the supporting edge (5) is smaller than or equal to the width (B₂) of the holding edge (4).

## Revendications

1. Procédé de fabrication d'une lentille de phare de véhicule (1) pour des véhicules automobiles, comprenant une surface courbe (2) et une surface plane (3), un bord de fixation (4) étant façonné sur le bord de la lentille et un bord d'appui (5) saillant par rapport à la surface plane (3) étant façonné sur le bord de fixation (4), pour l'appui sur un substrat, les deux surfaces de l'ébauche chaude de la lentille (1) étant pressées à blanc et ensuite l'ébauche encore chaude étant refroidie de manière spécifique pour réduire les contraintes à l'intérieur de la lentille, et à cet effet la lentille (1) est déposée avec son bord d'appui (5) sur une bande de refroidissement au cours du processus de refroidissement.

2. Procédé selon la revendication 1, dans lequel le bord d'appui (5) est façonné sur la circonférence extérieure de la lentille (1).

3. Procédé selon la revendication 1 ou 2, dans lequel l'épaisseur (D) du bord d'appui (5) vaut au moins 0,2 mm.

4. Procédé selon l'une quelconque des revendications 1 à 3, dans lequel la largeur (B₁) du bord d'appui (5) est inférieure ou égale à la largeur (B₂) du bord de fixation (4).
